# EUROPÄISCHE PATENTANMELDUNG

(11) **EP 2 243 354 A1**
(43) Veröffentlichungstag der Anmeldung: **27.10.2010**
(21) Anmeldenummer: 10003769.6
(22) Anmeldetag: 08.04.2010
(51) Int. Cl.: A01K 1/01

(54) **Reinigungsgerät für Pferdeställe**

(30) Priorität: 09.04.2009 AT 5582009
(71) Anmelder: Ullstein jun., Hanns, 85445 Oberding (DE)
(72) Erfinder: Ullstein jun., Hanns, 85445 Oberding (DE)
(74) Vertreter: Torggler, Paul Norbert

(57) **Zusammenfassung**

Verfahren zum Trennen von auf Böden von Pferdeställen, Ausläufen oder Ähnlichem aufgebrachter Einstreu von Mist, gekennzeichnet durch die Schritte:
- Aufnehmen des Mistes samt Einstreu (5) vom Boden (12) mit einer Aufnahmevorrichtung (30), die vorzugsweise gegenläufige Aufnahmeelemente (1) umfasst,
- Zuführen der aufgenommenen Einstreu samt Mist (5) zu einer Trennvorrichtung, welche ein Siebelement (4) und ein Fördermittel (3) umfasst,
- Fördern des aufgenommenen Mistes samt Einstreu (5) mit dem Fördermittel (3) entlang des Siebelements (4), welches eine Vielzahl von Löchern (45) aufweist, deren Durchmesser kleiner als die minimale Ausdehnung der Einstreu (8) ist,
- Trennen der Einstreu (8) vom Mist (6) durch Rütteln bzw. Schleudern des Siebelements (4) und/oder des Fördermittels (3), sodass der Mist (6) durch die Löcher (45) des Siebelements (4) gerüttelt, gedrückt bzw. geschleudert wird,
- Auswerfen der Einstreu (8) in einen Einstreusammelbehälter (21) oder auf den Auslauf- bzw. Stallboden (12).

## Beschreibung

Die Erfindung betrifft ein Verfahren und ein fahrbares Reinigungsgerät zum Trennen von auf Böden von Pferdeställen, Ausläufen oder Ähnlichem aufgebrachter Einstreu von Mist.

Auf Bauernhöfen bzw. in Ställen, wo Tiere gehalten und aufgezogen werden, fällt Mist an. Beim Entmisten liegt das größte Problem auf der einen Seite darin, dass die notwendigen Entmistungsarbeiten entweder per Hand verrichtet werden müssen, was einen erheblichen Personalaufwand bedeutet, oder dass die Arbeiten durch mechanische Geräte durchgeführt werden, wobei dies mit großen Investitionen verbunden ist.

Dazu sind bereits von der Firma Lely Geräte bekannt, die beispielsweise bei der Rinderhaltung eingesetzt werden, wobei der anfallende Mist mittels eines Bodenreinigungsgeräts durch Spalten in Güllekanäle weggeschoben wird. Dies ist allerdings nachteilig, wenn Einstreu auf dem Boden vorhanden ist, welches dann ebenfalls weggebracht wird und nicht mehr verwendbar ist. Bei diesen Arbeiten wird daher nicht nur der Mist beseitigt, sondern zu einem großen Teil auch die für die Tiere notwendige Einstreu, die meist aus Stroh, Sägespänen, Torf, Reisschalen, Hanf, Papierschnipseln oder besonders hergestellt Mischungen besteht, was sehr kostspielig ist.

Aus dem Stand der Technik ist beispielsweise bekannt, dass sich im Auslauf Einstreu in Form von Kies befindet, welcher täglich abgezogen wird. Dabei werden der Kies und der Mist gemischt. Dieses Gemisch wird dann über ein halbes Jahr im Gelände gelagert, wobei der Mist in Humus umgewandelt wird. Das neu entstandene Gemisch (Kies + Humus) wird dann auf einer Siebanlage getrennt, sodass der Kies wieder sauber in den Auslauf eingebracht werden kann, während der Humus als wertvoller Dünger verwendet wird. Diese Art der Entmistung ist sehr material- und arbeitszeitaufwändig.

Bei Pferdehaltungen wird der Mist aus den Boxen noch per Hand mit der Mistgabel in die Schubkarre befördert und auf eine Dungstätte gefahren. Obwohl bei dieser Tätigkeit darauf geachtet werden sollte, möglichst wenig von der jeweiligen Einstreu in die Schubkarre zu werfen, kann man das Mitnehmen eines gewissen Teils des Einstreu nicht verhindern.

Generell fällt der Mist nicht nur im Stall oder in den Boxen sondern auch in Ausläufen an, wobei es hierzu bereits fahrbare Mistabsauggeräte (ähnliche Funktionsweise wie bei Staubsaugern) gibt, die den Mist über ein Saugrohr in eine angetriebene oder gezogene Auffangwanne blasen, die dann wiederum auf der Dungstätte auszuleeren ist. Dieses Gerät kann in den Boxen, in Ausläufen oder sogar auf Weiden eingesetzt werden. Sie sind allerdings recht umständlich, da beispielsweise das Rohr per Hand über dem Mist gehalten werden muss, wobei die Handlichkeit auch von der Länge des Schlauches abhängig ist. Eine solche Entmistungsweise ist relativ personalintensiv, es können damit nur geringe Mistmengen aufgenommen werden und die Geräte verursachen Lärm.

Für den Auslauf gibt es bereits verschiedene Sammelgeräte, die den Mist z.B. über Schaufelwalzen, Bürsten oder Ähnliches in einen Behälter schleudern. Diese sind in Form von Selbstfahrern oder auch als Anbaugeräte/Anhänger ausgeführt. Die Bauarten dieser Geräte bewegen sich dabei zwischen großen Aufsitz-Rasenmähern bis zu kleineren Traktoren oder großen Hofladern. Boxen oder Ställe können damit schlecht bzw. gar nicht entmistet werden. Dies ist auch für Ausläufe mit einer weichen Deckschicht der Fall. Die genannten Geräte sind verhältnismäßig teuer, erleichtern aber die Reinigung von großen befestigten Ausläufen. Feinarbeiten im Bereich von Ecken oder Pfosten sind weiterhin von Hand notwendig. Der eingesammelte Mist wird in allen Fällen samt aufgebrachter Einstreu auf eine Dungstätte transportiert.

Bekannt sind auch Mistförderanlagen, die in Stallgebäuden bereits fest eingebaut sind. Beispielsweise kann der Mist einer jeden Box in eine der Box zugeordnete offene Luke geworfen werden. In einem Schacht transportiert dann ein Transportband, eine Kette oder Ähnliches den Mist direkt zur Dungstätte.

Bekannt sind weiters offene Mistschieber, die von einem Zugseil langsam zur Dungstätte und wieder zurück gezogen werden. Auch in einem Auslauf sind solche Mistschieber verwendbar.

Aus dem Stand der Technik ist auch die DE 103 20 943 84 bekannt, welche sich auf ein Verfahren und eine Vorrichtung zum Ausmisten von Stallungen bezieht. Darin wird in einer Aufnahme die Einstreu aufgenommen und dort durch einen Sensor die Einstreu in relativ trockene und relativ nasse Einstreu unterteilt. Durch eine Kippeinrichtung wird anschließend die Trennung durchgeführt, wobei darin eine Rütteleinrichtung mit einem gekoppelten Siebsystem und eine von einem Sensor gesteuerte Einrichtung zur Trennung der relativ trockenen Einstreu für das obere Sieb und der relativ nassen Einstreu für das untere Sieb vorgesehen ist. Die wesentliche Idee dieses Patents besteht zwar darin, die behandelte Einstreu komplett in die Stallungen zurückzuführen, wodurch die erforderliche Menge neuer Einstreu verringert werden kann, jedoch trifft der Sensor nur eine Entscheidung über nass oder trocken, womit zwangsweise auch immer eigentlich gebrauchsfähige Einstreu verschwendet wird.

Die WO 99/39844 zeigt eine Trennvorrichtung mit einer Art Siebtrommel. Dabei wird in die vordere Öffnung Material eingeworfen und durch Drehung der Siebtrommel eine Trennung in feines durch das Sieb passende Material und größere Bestandteile erreicht. Nachteilig ist, dass das Material händisch eingeworfen werden muss und das Gerät geschoben werden muss und somit nicht selbst verfährt. Zudem ist diese Siebtrommel bei nur für sehr feine Einstreu geeignet, da diese durch die Siebtrommellöcher passen muss, während der aufgenommene Mist anscheinend nicht durch diese Löcher passen soll. Wenn allerdings die Trommel mit hoher Geschwindigkeit schleudert, erfolgt keine ausreichende Trennung mehr, da sowohl Sand als auch Mistanteile durch die Siebtrommel gedrückt werden.

Die US 7,552,827 B2 zeigt eine Sandwaschvorrichtung, bei der Sand, der beispielsweise in einem Kuhstall verwendet wird, von Verunreinigungen gereinigt wird. Es geht somit nicht um eine Entmistungsautomation.

Die DE 1 457 883 zeigt ein fahrbares Entmistungsgerät mit einer Mistaufnahmeschaufel und einer Misttransportwanne. Es wird zwar eine automatische Entmistung des Stalles gezeigt, jedoch wird keine Trennung durchgeführt.

Die US 3,353,947 zeigt eine Strohreinigungsvomichtung, bei der Sprühelemente vorgesehen sind, die zum Wegblasen von Verunreinigungen von eingesammeltem Stroh dienen.

Die DE 100 45 331 A1 zeigt die Trennung von Exkrementen von der Einstreu, wobei beispielsweise ein fix montierter, umständlicher Waschbehälter für die Reinigung von Einstreu vorgesehen ist.

Den meisten dieser Anlagen bzw. Entmistungsvarianten ist gemeinsam, dass relativ umfangreiche Baumaßnahmen zu treffen sind, was wiederum hohe Investitionen bedeutet und/oder ein hoher Personaleinsatz nötig. Zudem geht viel Einstreumaterial verloren.

Die Aufgabe der Erfindung besteht nun darin, ein gegenüber dem Stand der Technik verbessertes Reinigungsverfahren und verbessertes Reinigungsgerät für Böden von Pferdeställen oder Ausläufen anzugeben. Insbesondere sollen die hohen Personalkosten, die durch Handarbeit anfallen, verringert werden, die hohen Investitionskosten für Mistförderanlagen oder Ähnliches verhindert werden und die Verschwendung von Einstreu unterbunden werden. Bevorzugt soll weiters eine möglichst automatische Entmistung, ohne großen umweltschädlichen Energieaufwand ermöglicht werden.

Dies wird für durch ein erfindungsgemäßes Verfahren mit den folgenden Schritten gelöst:
- Aufnehmen des Mistes samt Einstreu vom Boden mit einer Aufnahmevorrichtung, die vorzugsweise gegenläufige Aufnahmeelemente umfasst.
- Zuführen der aufgenommenen Einstreu samt Mist zu einer Trennvorrichtung, welche ein Siebelement und ein Fördermittel umfasst.
- Fördern der aufgenommenen Einstreu samt Mist mit dem Fördermittel entlang des Siebelements, welches eine Vielzahl von Löchern aufweist, deren Durchmesser kleiner als die minimale Ausdehnung der Einstreu ist.
- Trennen der Einstreu vom Mist durch Rütteln bzw. Schleudern des Siebelements und/oder des Fördermittels, sodass der Mist durch die Löcher des Siebelements gerüttelt, gedrückt bzw. geschleudert wird.
- Auswerfen der Einstreu in einen Einstreusammelbehälter oder auf den Auslauf-bzw. Stallboden.

Dieses Verfahren kann beispielsweise durch ein fahrbares Reinigungsgerät durchgeführt werden, wobei durch möglichst kleine, selbständig arbeitende Reinigungsgeräte in Form von Robotern rund um die Uhr und an allen Tagen die Arbeiten durchgeführt werden können, wodurch die auszuführende Gesamtarbeitsleistung in viele kleine Arbeitsvorgänge aufgeteilt werden kann. Diese sehr kleinen Arbeitsvorgänge verbrauchen verhältnismäßig wenig Energie zur Erledigung der einzelnen Aufgabe womit auch in kürzester Zeit der gerade angefallene Mist beseitigt werden kann. Somit müssen zur Entmistung weder schwere Handarbeiten verrichtet noch große, kostenintensive Maschinen bzw. Fahrzeuge angeschafft werden. Energiekosten fallen praktisch nicht an, weil der Roboter (auch Mistserver genannt) mittels Batterien, die wiederum über Solartechnik gespeist werden können, betrieben werden kann.

Eine besonders bevorzugte Ausführungsform des vorliegenden Verfahrens kann vorsehen, dass die Einstreu vor dem Auswerfen auf den Auslauf- bzw. Stallboden durch eine Waschvorrichtung gewaschen wird und/oder die Einstreu vor dem Auswerfen auf den Auslauf- bzw. Stallboden durch eine Sprühvorrichtung mit effektiven Mikroorganismen oder anderen biologischen Hilfsmitteln oder Desinfektionsmitteln besprüht wird.

Gemäß einem weiteren bevorzugten Ausführungsbeispiel des vorliegenden Verfahrens kann vorgesehen sein, dass durch einen Temperatur- und/oder Geruchssensor zumindest der obere Bereich der auf dem Auslauf- bzw. Stallboden angefallene Mist nebst aufgebrachter Einstreu detektiert wird und von der Aufnahmevorrichtung des fahrbaren Reinigungsgeräts aufgenommen und der Trennvorrichtung zugeführt wird.

Die der Erfindung zugrunde liegenden Aufgaben werden auch durch ein fahrbares Reinigungsgerät gelöst, welches eine Aufnahmevorrichtung und eine Trennvorrichtung aufweist, wobei die Aufnahmevorrichtung vorzugsweise gegenläufige Aufnahmeelemente umfasst, die den Mist (auch mit Teilen der Einstreu) vom Boden aufnehmen und der Trennvorrichtung zuführen und wobei die Trennvorrichtung ein Siebelement und ein Fördermittel umfasst, wobei das Fördermittel den Mist samt Einstreuteilen entlang des Siebelements - das eine Vielzahl von Löchern aufweist, deren Durchmesser kleiner ist als die minimale Ausdehnung der Einstreu - bewegt, wobei Rüttel- oder Schleuderbewegungen des Siebelements und/oder des Fördermittels den Mist durch die Löcher des Siebelements hindurch in einen Mistsammelbehälter rütteln, drücken bzw. schleudern und das Fördermittel die Einstreu im Endbereich des Siebelements in einen Einstreusammelbehälter oder auf den Auslauf- bzw. Stallboden auswirft. Damit kann das Reinigungsgerät möglichst automatisch den angefallenen Mist entfernen und gleichzeitig das Einstreumaterial reinigen und pflegen und - wenn gewünscht - auch gleichmäßig auf dem Boden verteilen. Besonders vorteilhaft ist dabei, dass sämtliche Entmistungs- und Trennvorgänge durch ein einziges Gerät bzw. einen einzigen Roboter durchgeführt werden können. Die minimale Ausdehnung der Einstreu kann vor allem nach starker Benutzung und Abnützung kleiner werden als der Durchmesser der Löcher im Siebelement. Damit kann auch die Einstreu durch die Löcher hindurch ausgeschleudert werden. Prinzipiell sollten aber die einzelnen Einstreuteile im Wesentlichen ihre Größe und Form behalten.

Besonders bevorzugt kann vorgesehen sein, dass das Fördermittel als Förderschnecke ausgeführt ist, die den zugeführten Mist samt Einstreu durch das als Lochtrommel ausgeführte Siebelement fördert, wobei sich die Förderschnecke um eine Achse dreht, sodass die Zentrifugalkraft den Mist durch die Löcher der Lochtrommel hindurch in den Mistsammelbehälter hinausschleudert bzw. -drückt.

Gemäß einer speziellen Ausführungsform kann vorgesehen sein, im unteren Bereich der Lochtrommel nicht nur relativ kleine Löcher angeordnet sind, sondern zusätzlich Schlitze angeordnet sein können, die es ermöglichen, dass Heu- und Strohreste, die von den Tieren (oder auch vom Wind) in den Stall/Auslauf gelangen können, leichter ausgesiebt werden und nicht wieder mit der gesäuberten Einstreu ausgeworfen werden.

Um eine noch bessere Trennung der Einstreu vom Mist zu gewährleisten, kann vorgesehen sein, dass die Förderschnecke zumindest zwei Drehbereiche aufweist, die sich in unterschiedlicher Geschwindigkeit um die Achse drehen, wobei besonders bevorzugt die Drehgeschwindigkeit der Förderschnecke zu Beginn der Förderung entlang des Siebelements am größten ist und gegen Ende abnimmt. Bevorzugt kann auch vorgesehen sein, dass sich die Lochtrommel ebenfalls - am besten koaxial und gegenläufig zur Förderschnecke - dreht, wodurch das Sieben effizienter durchgeführt werden kann.

Gemäß einer weiteren bevorzugten Ausführungsform kann vorgesehen sein, dass die Aufnahmeelemente, die im Frontbereich des Reinigungsgeräts angeordnet sind, in Form von zwei gegenläufigen Schaufeln, Scheiben oder Bürsten gebildet sind, die sich in einem Aufnahmebereich der Aufnahmevorrichtung überlappen, sodass die Aufnahmeelemente den in der im Wesentlichen gesamten Breite des Frontbereichs des Reinigungsgeräts aufgenommenen Mist samt Einstreu durch die gegenläufige Bewegung der Schaufeln, Scheiben oder Bürsten zur Trennvorrichtung befördern. Somit wird die gesamte Einstreu samt Mist, die vor dem sich bewegenden Reinigungsgerät liegt, aufgenommen. Die Aufnahme kann aber auch in Form von Walzen (wie beispielsweise bei Schneefräsen) erfolgen.

Eine weitere bevorzugte Ausführungsform kann vorsehen, dass es einen Geräterahmen, vorzugsweise vier am Geräterahmen angeordnete Räder und zumindest eine vorzugsweise elektrische Antriebseinheit zum Antreiben der Räder, der Aufnahmevorrichtung und der Trennvorrichtung umfasst. Weiters kann im hinteren Bereich des Reinigungsgeräts ein Planierschild angebracht sein, das hauptsächlich durch sein Eigengewicht die Einstreu planiert. Zusätzlich können auch Druckfedern wirken und andere Hilfsmittel vorhanden sein, die ein Anheben des Planierelements bei Erreichen von Hindernissen ermöglichen.

Bevorzugte Ausführungsformen der vorliegenden Erfindung können weiters vorsehen, dass beispielsweise die Antriebseinheit über Solarzellen mit Strom belieferbar und/oder aufladbar ist oder beispielsweise der Mistsammelbehälter eine öffenbare Klappe aufweist.

Weitere bevorzugte Ausführungsformen, die vor allem für die Ausführung der vorliegenden Erfindung als selbstfahrender Reinigungsroboter dienlich sind, sehen vor, dass das Reinigungsgerät einen Drehmomentsensor umfasst, der das Drehmoment der zumindest einen Antriebseinheit detektiert und einer Steuer- und Regeleinrichtung zuführt oder dass zusätzlich ein Temperatur- und/oder Geruchs- und/oder Optiksensor vorgesehen ist, der die Temperatur und/oder den Geruch und/oder den Gegenstand in einem Detektierbereich - der im Wesentlichen dem Stallboden samt angefallenem Mist und aufgebrachter Einstreu entspricht - erfasst und der Steuer- und Regeleinheit zuführt. Beispielsweise könnte auch der Temperatur- und/oder Geruchssensor einen Lasertaster umfassen. Weiters wäre es möglich, dass ein Bewegungs-/Ultraschallsensor vorgesehen ist, der im Detektierbereich Hindernisse detektiert und entsprechende Signale einer Steuer- und Regeleinheit zuführt. Es können auch beispielsweise akustische Signale oder Sensoren (Laser tastet eine bestimmte Höhe ab) eingesetzt werden um zielgenau den Pferdeapfelhaufen zu finden und diesen dann speziell behandeln zu können.

Um beim Betreiben des fahrbaren Reinigungsgerätes Energiekosten gering zu halten, kann vorgesehen sein, dass die Antriebseinheit - vorzugsweise automatisch durch die Steuer- und Regeleinheit - zwischen einem Fahrmodus und einem Arbeitsmodus schaltbar ist. Es müssen nicht alle Funktionen am Reinigungsgerät selbst angeordnet sein, sondern können auch im Stall integriert sein und detektierte Informationen beispielsweise über Funk der Steuer- und Regeleinheit zuführen.

Weitere Verbesserungen können durch eine Verstelleinrichtung, durch die eine Veränderung der Winkelstellung der Aufnahmeelemente in Bezug auf die Auslauf- bzw. Stallbodenebene durchführbar ist, bringen. Ähnliche Verbesserungen können durch eine Waschvorrichtung, die die vom Mist getrennte Einstreu vor dem Auswerfen auf den Auslauf- bzw. Stallboden wäscht oder durch eine Sprühvorrichtung, die die vom Mist getrennte Einstreu mit Desinfektionsmitteln, effektiven Mikoorganismen oder anderen biologischen Hilfsmitteln (auch durch katalytische Aktivierung) besprüht, erreicht werden.

Zudem soll nicht ausgeschlossen sein, dass das erfindungsgemäße Reinigungsgerät auch dort eingesetzt wird, wo gar keine Einstreu vorhanden ist (z. B. auf Holzböden, Betonböden oder Spaltenböden), wodurch kein Trennen des Mistes von der Einstreu erfolgen muss. Dazu müsste auch keine Sieb-/Trennvomichtung unbedingt vorgesehen sein. Dennoch ist die Trennvorrichtung vorteilhaft, da sie den Mist zerkleinert, was eine Oberflächenvergrößerung und Hohlraumbildung zur Folge hat, wodurch Sauerstoff besser aufgenommen werden kann und dies der schnelleren Verrottung entgegenkommt. Der übliche Auswurf würde dann weitestgehend wegfallen und der Mist nach innen durch die Trennvorrichtung hindurch umgelenkt. Für die Verrottung ist es auch vorteilhaft, wenn der Mist im Reinigungsgerät mit Verrottungshilfsmitteln fein dosiert besprüht wird. Dadurch können die ziemlich teuren Mittel sparsam und umweltfreundlich verwendet werden. Somit muss nicht großflächig (im Auslauf oder in der Dungstätte) die Behandlung vorgenommen werden, sondern kann sehr wirksam, direkt und gezielt am gesammelten Mist durchgeführt werden. Mit dieser Direktbehandlung kann somit eine Auflockerung des meistens festen Mistes (Qualitätsverbesserung), ein sehr gezieltes Behandeln des Mistes (Kostensenkung) und keine zusätzlich anfallende Arbeit (Kostensenkung) erreicht werden.

Die ursprüngliche Heimat des Pferdes ist die Steppe (z. B. die Prärie in Nordamerika oder die Pampa in Südamerika), die man auch als baumlose Graslandschaft bezeichnen kann. Sie zeichnet sich durch sommerliche Trockenheit und winterliche Kälte aus und weist meist feinerdige Böden auf. Darauf hat sich das Pferd in Millionen von Jahren bestens eingestellt, so dass sich seine Hufe diesen harten Bodenverhältnissen bestens angepasst haben. Das trifft auch in anderen Gegenden (z. B. Gebirge) zu, wo Pferde an das Laufen auf steinigen Transportwegen oder auf den Trampelpfaden beim Suchen nach Nahrung tagtäglich gewöhnt sind. Deshalb ist es nahe liegend, wenn man als Einstreumaterial für den Auslauf oder den Stall auf das Material zurückgreift, das die Pferde seit ihrer Entstehung bereits kennen, nämlich Sand oder Kies, die praktisch in allen Teilen der Welt vorkommen und kostengünstig zu bekommen sind. Bevorzugt wird für das beschriebene Verfahren als Einstreumaterial ein zunächst herkömmlicher, gewaschener Kies mit einer Körnung von je nach Anforderung z.B. 8 - 16 mm verwendet. Diese Körnung verleiht der ausgetragenen Oberfläche (Tretschicht) eine recht feste und dennoch elastische Verfassung, weil die einzelnen Kieselsteine sich verschieben, aber auch nach unten gedrückt werden können. Auf der anderen Seite lässt sich diese Körnung gut bearbeiten, weil sie nicht zu fein (wie z.B. Sand) und nicht zu grob ist (eventuelle Druckstellen-Gefahr an Hufsohle). Der eingesetzte Kies ist in vielen Gegenden der Erde eine natürliche Lauffläche (Transportwege, Trampelpfade auf Gebirgsweiden usw.) der Pferde. Der Kies ist gegenüber Mist unempfindlich, nimmt also keine Teile davon auf. Außerdem ist er an der Oberfläche glatt, so dass sich praktisch keine Mistteile verfangen können. Der Kies ist im Wesentlichen nicht wasseraufnahmefähig, lässt aber Oberflächenwasser sehr gut in den Grund abfließen.

Um das Kies-Einstreumaterial in seinen Eigenschaften noch zu verbessern, wird ein entsprechendes Kunststoffmaterial (die Mengen richten sich nach Ansprüchen und Kiesbeschaffenheit), wie es schon z.B. als Granulat in Fußball-Kunstrasen-Flächen oder als Häcksel in Reitplätzen verwendet wird, eingemischt

Die Kunststoffeinstreu soll die bekannteste Einstreu, nämlich das bei der Komernte anfallende Stroh ersetzen, und kann folglich auch als Kunststroh bezeichnet werden. Das Kunststroh kann z. B. aus einem rechteckigen Kern bestehen, der von Röhren umgeben ist. Diese Röhren sind längsseitig durch einen winzigen Spalt nach außen hin geöffnet. Der Kunststoff des Kunststrohs kann aber auch nur aus porösem Grundmaterial bestehen und unterschiedliche Formen (z. B. Kömerform) aufweisen. Auf diese Art und Weise wird sichergestellt, dass Feuchtigkeit (z.B. Urin, Wasser) leicht eindringen kann. Auf der anderen Seite kann es aber wieder leicht austreten, was durch das Reinigungsgerät erreicht werden kann.

Der Kunststoff ist weicher als der Kies und bringt somit höhere Elastizität und Federung. Durch die Einlagerung des Kunststoffes zwischen die einzelnen Steine (bei einer Kömerdurchmessergröße von ca. 4-6 mm und einer Länge von ca. 50 mm) wird die Tretschicht rutsch- und scherfester. Der verwendete Kunststoff soll, durch seine röhrenförmige oder auch poröse Beschaffenheit, Wasser aufnehmen können und dadurch weniger Staubentwicklung bei Trockenheit und Abrieb der Kieselsteine verursachen. Der Kunststoff bringt bessere Frostsicherheit und unterbindet Schimmelbildung. Diese Einstreu ist für Grundwasser und Tiere/Pflarizen unbedenklich. langlebig, säureresistent und UV-beständig.

Die beschriebene Mischung aus den Einstreu-Materialien Kies und Kunststoff eignen sich somit besonders für Pferde-Haltungen, da sie sich auch den liegenden Pferdekörper gut anpassen.

Bevorzugt kann deshalb für ein erfindungsgemäßes Verfahren eine Einstreu zum Aufbringen auf Böden von Pferdeställen, Ausläufen oder Ähnlichem verwendet werden, die sich dadurch auszeichnet, dass die Einstreu 10 bis 90 % Kunststoffeinstreu und 90 bis 10 % Kies umfasst. Bevorzugt kann dieses Einstreugemisch derart ausgebildet sein, dass die minimale Ausdehnung der Kunststoffeinstreu und des Kieses im Wesentlichen größer ist als der Durchmesser der Löcher eines Siebelements eines fahrbaren Reinigungsgeräts nach Anspruch 5.

Weiters kann für ein erfindungsgemäßes Verfahren eine Kunststoffeinstreu verwendet werden, die halboffene, röhrenförmige, längliche oder auch poröse Ausnehmungen zur vorzugsweise adhäsiven Aufnahme von Flüssigkeit, vorzugsweise Tierurin, umfasst. Besonders bevorzugt kann dazu vorgesehen sein, dass die Kunststoffeinstreu ein bis zehn, vorzugsweise drei bis sieben, längliche, halboffene, halbröhrenförmige Ausnehmungen aufweist, die jeweils über Kanäle mit der Oberfläche der zylindrischen, vorzugsweise halmförmigen, Kunststoffeinstreu verbunden sind. Dabei kann bei dieser Ausgestaltung vorzugsweise noch ein poröser Kunststoff herangezogen werden. Gemäß einer weiteren Ausführungsvariante könnte die Kunststoffeinstreu als eine Art gitterförmiger Schlauch ausgeführt sein. Besonders bevorzugt ist eine Mischung der Kunststoffstreu mit Kies zu einer Kies-Kunststoff-Einstreu.

Die Kunststoffeinstreu bietet die Vorteile, dass sie:
- Wasser und Urin aufnehmen kann,
- das aufgenommene Wasser/Urin wird durch Schleudern wieder abgegeben kann,
- sich nicht auflöst und zerstörungsresistent ist,
- sich nicht an die Löcher/Schlitze des Siebelements anlegt,
- durch das relativ hohe Eigengewicht eine unkomplizierte Handhabung erlaubt und
- dass sie auch bei Vermischung mit dem Kies gemeinsam vom Mist getrennt werden können.

Weiters können für eine erfindungsgemäßes Verfahren Unterteilungselemente (auch Niveaustege genannt) auf dem Boden verwendet werden, die eine einfache und geordnete Schlafplatzanordnung für die Pferde ermöglichen, was sich positiv auf das allgemeine Wohlbefinden der Tiere auswirkt. Durch die elastische Ausbildung der relativ hohen Elemente (zwischen ca. 30 und 80 cm) können sich die Tiere bequem an den Unterteilungselementen anlehnen, die durch das Gewicht der Tiere etwas nachgeben, wodurch mit der eingebrachten Einstreu eine für die Tiere angenehme Kuhle gebildet werden kann. Durch die breitere Ausführung der Unterteilungselemente im unteren Bereich, wird dort eine höhere Stabilität erreicht, während sie im oberen, schmäleren Bereich leichter nachgeben, wodurch die Kuhlenbildung noch unterstützt wird. Zudem ist ein Pferdeschlaf- bzw. -liegeplatz mit Unterteilungselementen wesentlich kostengünstiger als ein aus dem Stand der Technik bekanntes sogenanntes Soft-Bett, welches aus zwei um eine Gummimatte vulkanisierte Schaumstofflagen besteht.

Durch die hier vorliegende Erfindung wird mit dem Kiesel-Kunststoff-Einstreugemisch nicht nur ein entsprechend vorteilhaft ausgestatteter Untergrundbelag geschaffen, sondern es wird durch das fahrbare Reinigungsgerät auch ein einfaches und gründliches Reinigen und Trennen der Einstreu von angefallenem Mist ermöglicht. Somit entfallen die sich ansonsten wiederholenden Einstreuarbeiten, ein zusätzlicher Einkauf und eine Lagerung von Einstreumaterial ist nicht mehr erforderlich und die arbeitsintensiven Ausmistarbeiten entfallen.

Somit kann durch die vorliegende Erfindung gezielt lokal Mist/Urin - vermengt mit Teilen des Belages/Einstreu - aufgesammelt und vom Mist/Urin getrennt werden. Der Mist bzw. Urin wird auf eine Dungstätte abgelagert. Die mit aufgesammelten Teile des Belages werden gereinigt und gleichzeitig mit Produkten versehen, die die ökologische Qualität des Belages (Bodenmikrobiologie) stets absichern.

Der abgelagerte Mist/Urin ist durch das Herausschleudern ein sehr homogener, kleinfaseriger Stoff, der bereits einen hochwertigen Dünger darstellt, aber durch zugeführte Zusatzstoffe noch mehr Qualität erhalten kann (z. B. kein übler Geruch mehr usw.). Daher ist es durchaus denkbar, dass man den abgelagerten Pferdemist gleich vorzugsweise automatisch abpacken und verkaufen kann.

Die alltägliche Entmistungsarbeit (z. B. Entmisten, Abtransportieren, Einstreuen usw.) ist meist zeitlich gebunden (vormittags, wenn wenige Reiter da sind) und ziemlich aufwändig, weil in der Zwischenzeit viel Mist anfällt. Diese bisher ein- oder zweimal pro Tag anfallende, aufwändige Arbeit kann nun durch das erfindungsgemäße Verfahren und den Mistserver in sehr viele kleine, einfach zu erledigende Einzelarbeitsschritte zerlegt bzw. umgeformt werden. Die Gesamtarbeit wird durch das Verfahren in viele kleine Teilarbeiten aufgeteilt, was bedeutet dass weniger Arbeitsaufwand pro Arbeitseinheit, geringerer Energiebedarf pro Arbeitseinsatz und kleinere Arbeitsgeräte pro Arbeitseinsatz eingesetzt werden können. Dies ermöglicht es erst, dass der erfindungsgemäße Roboter effizient arbeiten kann.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen
- Fig. 1: eine schematische Darstellung des fahrbaren Reinigungsgeräts,
- Fig. 2: eine schematische Seitenansicht des fahrbaren Reinigungsgerätes,
- Fig. 3: eine schematische Seitenansicht des Reinigungsgerätes mit geöffneter Klappe,
- Fig. 4.: einen Auslaufboden mit Bodenbefestigungsgittem,
- Fig. 5: Detailansichten der Kunststoffeinstreu und
- Fig. 6: die Einstreu samt Mist.

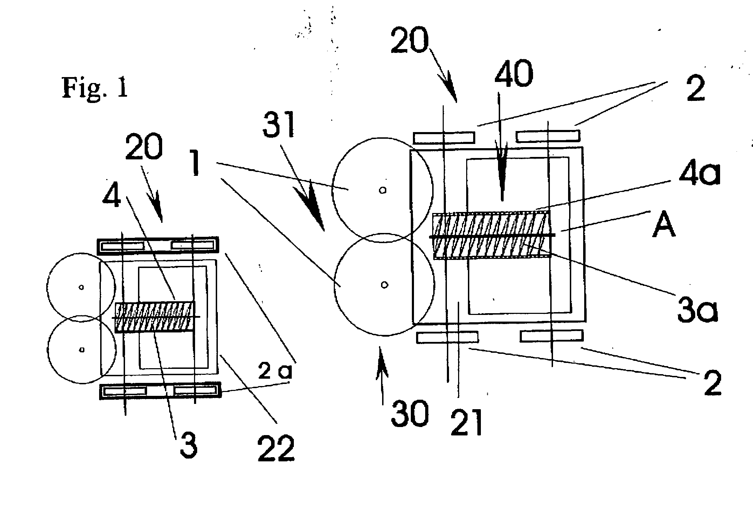

In Fig. 1 ist eine Draufsicht auf eine schematische Darstellung des fahrbaren Reinigungsgerätes 20 gezeigt. Dieses Reinigungsgerät 20 umfasst eine Aufnahmevorrichtung 30 und eine Trennvorrichtung 40. Über die Aufnahmeelemente 1 **-** die vorzugsweise gegenläufig ausgeführt sind - wird im teilweise überlappenden Aufnahmebereich 31 Mist samt Einstreu (Mist-Einstreu-Mist-Gemisch 5) aufgenommen und der Trennvorrichtung 40 zugeführt. Die Trennvorrichtung 40 ist dabei im Geräterahmen 22 angeordnet, welcher die Räder 2 bzw. durch die Räder 2 angetriebene Ketten 2a umfasst. Die Trennvorrichtung 40 an sich weist ein Siebelement 4 in Form einer Lochtrommel 4a auf, in welcher sich ein Fördermittel 3 in Form einer Förderschnecke 3a um die Achse A dreht.

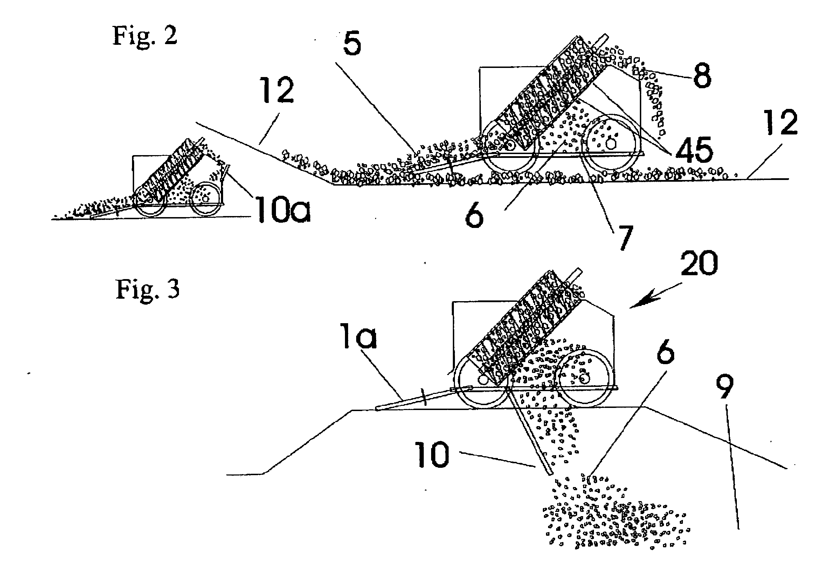

Wie in Fig. 2 dargestellt, wird durch die Dreh- und Schleuderbewegung der Förderschnecke 3a der Mist 6 des aufgenommenen Mist-Einstreu-Gemisches 5 durch die Löcher 45 der Lochtrommel 4a gedrückt und von der Einstreu 8 getrennt, die am Ende der Förderschnecke 3a wieder auf den Boden 12 ausgeworfen wird. Der Mist 6 wird im Mistsammelbehälter 7 gesammelt. Im linken Bereich ist dargestellt, wie alternativ auch die ausgeworfene Einstreu 8 mittels einer Umlenkklappe 10a im Reinigungsgerät 20 gesammelt werden kann.

In Fig. 3 ist dargestellt, wie sich eine Klappe 10 des Reinigungsgerätes 20 und dessen Mistsammelbehälter 7 öffnet, wodurch der Mist 6 beispielsweise auf eine Dungstätte 9 befördert werden kann.

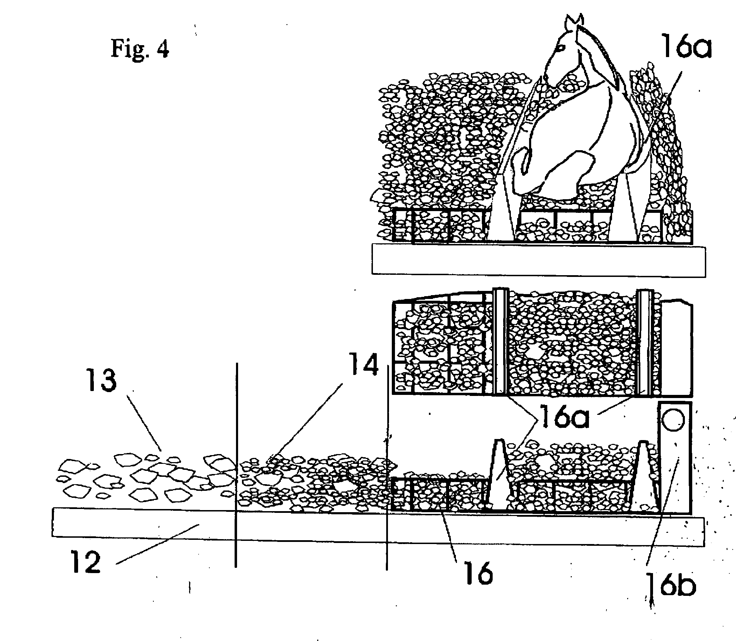

In Fig. 4 ist der Boden 12 ersichtlich, auf dem Kies 13 und dazu mit Kunststoffeinstreu 14 gemischt angeordnet bzw. aufgestreut ist. Wie auf der rechten Seite unten in Seitenansicht und oben In Draufsicht ersichtlich, kann zusätzlich ein Bodengitter 16 vorgesehen sein, in welchen die gesamte Einstreu 8 eingebracht werden kann. Zusätzlich sind Niveaustege 16a dargestellt, die durch die größere Einstreumenge angenehme Kuhlen für liegende Pferde bilden können. Wenn dann noch die Niveaustege 16a aus Gummi bestehen, können sich diese gut dem Pferdekörper anpassen (siehe Fig. 4 rechts oben). Diese Bodengitter 16 können zusätzlich durch Umrandungen 16b abgetrennt sein.

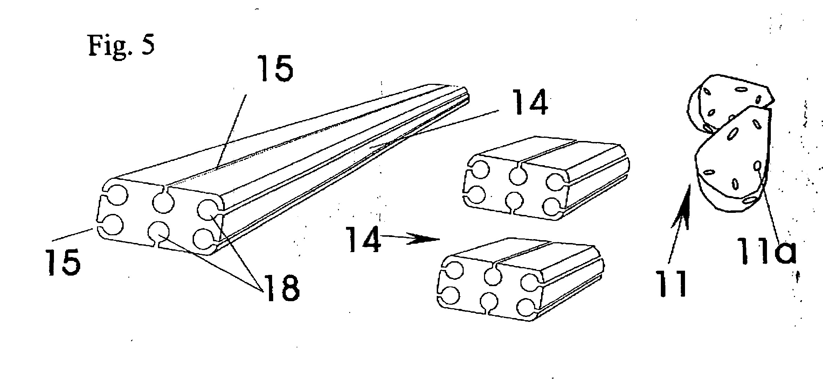

Fig. 5 zeigt Ansichten der Kunststoffeinstreu 14, welche röhrenförmige Ausnehmungen 18 aufweisen, die über Kanäle 15 von außen erreichbar sind, wodurch eine Wasseraufnahmefähigkeit erreicht wird. Die Kunststoffeinstreu 14 ist dabei in Form eines länglichen Kunststrohs ausgeführt. Das Bezugszeichen 11 bezeichnet ein Kunststoffkorn, das Poren 11 a aufweist.

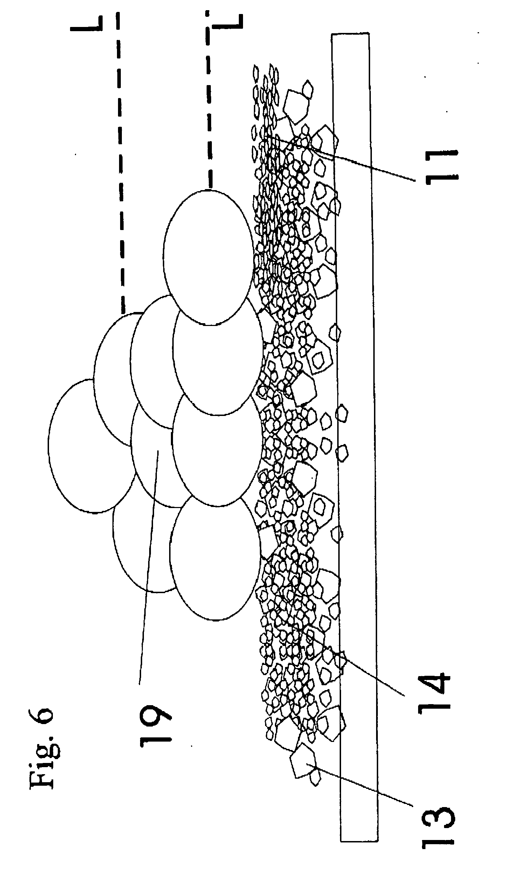

Fig. 6 zeigt nochmals das Einstreugemisch schematisch, welches die Kunststoffeinstreu 14 (die aus einzelnen Kunststoffkörnem 11 besteht) und die Kieseinstreu 13 umfasst und auf welchem Pferdeäpfelhaufen 19 den Mist 6 bilden. Das Bezugszeichen L stellt die Laserstrahlen dar, die beispielsweise ausgehend vom Reinigungsgerät Objekte in ihrem Laserbereich detektieren.

Weiters werden im Folgenden konkrete Ausführungsvarianten beschrieben, wobei teilweise die Bezeichnungen zu den Bezugszeichen gegenüber den Bezugszeichen in den Ansprüche divergieren:
Der Mistserver 20 besteht aus einem rechteckigen Fahrzeugrahmen 22, an dem vier von einander unabhängige, elektrisch angetriebene Räder 2 befestigt sind. Außerdem besitzt er an der Frontseite zwei Mistaufnahmescheiben 1, die den aufgenommenen Mist samt Einstreu 5 vor eine im Rahmen 22 schräg nach oben verlaufend befestigte Transportschnecke 3a werfen. Diese Schnecke 3a dreht sich in einem Lochblechkorb 4a und befördert somit den aufgenommenen Mist (wenn der Mistserver fahrend auf Pferdeäpfel trifft) entlang der runden Lochblechwand 4a nach oben. Schnecke 3a und Lochblechkorb 4a sind an allen vier Seiten und oben und unten eingeschalt. Lediglich der obere Rand des Lochblechkorbes 4a ist frei gehalten. Da sich die Schnecke 3a schnell dreht, wird der Mist 6 durch die Löcher 45 des Lochbleches 4a geschleudert und fällt dann auf den Boden 12.

Das besondere an dem erfindungsgemäßen Entmistungsverfahren ist, dass der Mistserver 20 nicht nur Mist 6, sondern auch die Einstreu 8, die um und unter dem aufzunehmenden Mist 6 herumliegt, aufnehmen kann. Durch die hohe Zentrifugalkraft, die die schnell drehende Schnecke 3a auf das Sammelgut 5 des Mistservers 20 auslöst, werden die Mistteile 6 ganz präzise vom glatten, harten Kies 13 getrennt und durch das Lochblech 4a geschleudert, während die Kieselsteine 13 nach oben gelangen und wieder gereinigt in den Auslauf 12 gestreut werden. Gleiches geschieht auch mit dem Kunststroh 14, wobei die Zentrifugalkraft, zusätzlich zur Reinigung, die aufgenommene Flüssigkeit (z.B. auch den Urin der Pferde) nach außen abgibt.

Hat der Mistserver 20 genügend Mist 6 aufgesammelt und dabei die Einstreu 8 gereinigt und wieder ausgeworfen, fährt er automatisch zur Mistserver-Servicestation, die erhöht über dem Boden der Dungstätte 9 liegt (Dungstätte kann auch unterhalb der Bodenkante liegen). Dort angekommen wird die Bodenklappe 10 des Fahrzeugrahmens 22 geöffnet, so dass der Mist 6 automatisch abgeladen wird. Durch einen besonderen Befehl wird die Klappe 10 dann wieder verschlossen (z.B. durch Vorwärtsfahren über eine Druckschiene, die den Bodendeckel nach oben drückt).

Gleichzeitig mit diesem Vorgang wird der Akku des Mistservers aufgeladen (wie das auch bei den Rasenmähern usw. der Fall ist), so dass er dann mit voller Kraft erneut zum Einsammeln ausfahren kann.

Damit der Mistserver 20 effektiv eingesetzt werden kann, sollte sich die zu säubernde Lauffläche, auf der er arbeiten muss, möglichst ebenmäßig darbieten. Das hat den Vorteil, dass die Aufnahmescheiben 1 immer in einem günstigen Winkel zu dem aufzunehmenden Mist 6 (z.B. Pferdeäpfelhaufen 19) stehen und nicht unnötig tief (oder zu hoch) in das Einstreumaterial 8 eintauchen müssen. Es muss somit weniger Einstreu 8 ausgesiebt werden, dafür fällt pro Arbeitseinsatz prozentual mehr Mist 6 an. Um die Ebenmäßigkeit zu erreichen, werden zunächst Bodenbefestigungsgitter 16a auf dem Boden 12 ausgelegt, die eventuelle Unebenheiten vorteilhaft ausgleichen. Dann werden die Rasterräume des Gitters 16a mit dem Einstreumaterial 8 aufgefüllt, so dass die angestrebte Ebenmäßigkeit an sich schon erzielt wurde, denn der Mistserver 20 kann praktisch ganz flach über die Oberkanten des Rastergitters 16a gleiten. Gleiches gilt auch für andere Werkzeuge, wie z.B. Räumschilde, Schaufel usw.

Der große Nachteil dieses Verfahrens liegt dabei aber darin, dass auch die Pferde mit ihren harten Hufen (auch z.B. Hufeisen) auf den Rasterkanten rutschen und obendrein ein hartes Geläuf haben, was gesundheitlich bedenklich ist. Deshalb werden Niveaustege 16c, die sich in regelmäßigen Abständen längs der Hauptfahrrichtungen des Mistservers 20 befinden, in die Rastergitter 16a der Bodenbefestigung eingelassen. Nun wird das Einstreumaterial 8 bis zur Oberkante der Niveaustege 16c aufgefüllt. Man erreicht dadurch ebenfalls eine ebenmäßige Oberfläche, so dass der Mistserver 20 auf den Niveaustegen 16c problemlos arbeiten kann, aber auch die anderen möglichen Werkzeuge (Traktorschubschild usw.) gehindert werden, zu viel Einstreumaterial 8 abzutragen.

Sehr große Vorteile sind dabei entstanden: Die Pferde haben einen weicheren, gesünderen Laufuntergrund und rutschen deshalb weniger aus. Außerdem können sie sich bequem zum Ruhen hinlegen, denn das Einstreumaterial 8 passt sich zwischen den Niveaustegen 16a dem Körper gut an. Diese vorteilhafte Körperanpassung kann noch erhöht werden, wenn die Niveaustege 16a aus starkem Gummimaterial (das aber verformbar ist) hergestellt sind. Die Umrandung 16b der Bodenbefestigung verhindert, dass das Einstreumaterial 8 nach außen weggetragen wird. Außerdem stellt es eine Abgrenzung für den Mitserver 20 dar (Gegenfahren und daraufhin Umkehrung) oder man zieht durch die vorhandene Aussparung der Umrandung 16b einen elektrischen Begrenzungsdraht, der den Mistserver 20 wieder in die richtige Richtung weist.

Generell kann im Bereich der Aufnahmeelemente zusätzlich ein Spomrad bzw. eine Spomwalze im vorderen Bereich zum Ertasten von Pferdeäpfelhaufen 19 und zur Winkelstellung der Aufnahmescheiben 1 zum Boden hin vorgesehen sein, was ein präziseres Arbeiten und damit das Stromsparen ermöglicht.

## Patentansprüche

1. Verfahren zum Trennen von auf Böden von Pferdeställen, Ausläufen oder Ähnlichem aufgebrachter Einstreu von Mist, **gekennzeichnet durch** die Schritte:
- Aufnehmen des Mistes samt Einstreu (5) vom Boden (12) mit einer Aufnahmevorrichtung (30), die vorzugsweise gegenläufige Aufnahmeelemente (1) umfasst,
- Zuführen der aufgenommenen Einstreu samt Mist (5) zu einer Trennvorrichtung, welche ein Siebelement (4) und ein Fördermittel (3) umfasst,
- Fördern des aufgenommenen Mistes samt Einstreu (5) mit dem Fördermittel (3) entlang des Siebelements (4), welches eine Vielzahl von Löchern (45) aufweist, deren Durchmesser kleiner als die minimale Ausdehnung der Einstreu (8) ist,
- Trennen der Einstreu (8) vom Mist (6) **durch** Rütteln bzw. Schleudern des Siebelements (4) und/oder des Fördermittels (3), sodass der Mist (6) **durch** die Löcher (45) des Siebelements (4) gerüttelt, gedrückt bzw. geschleudert wird,
- Auswerfen der Einstreu (8) in einen Einstreusammelbehälter (21) oder auf den Auslauf- bzw. Stallboden (12).

2. Verfahren nach Anspruch 1, **dadurch gekennzeichnet, dass** die Einstreu (8) vor dem Auswerfen auf den Auslauf- bzw. Stallboden (12) durch eine Waschvorrichtung gewaschen wird.

3. Verfahren nach Anspruch 1 oder 2, **dadurch gekennzeichnet, dass** die Einstreu (8) vor dem Auswerfen auf den Auslauf- bzw. Stallboden (12) durch eine Sprühvorrichtung mit biologischen Hilfsmitteln besprüht wird.

4. Verfahren nach einem der Ansprüche 1 bis 3, **dadurch gekennzeichnet, dass** durch einen Temperatur- und/oder Geruchs- und/oder Optiksensor zumindest der obere Bereich des auf dem Auslauf- bzw. Stallboden (12) aufgebrachten Mistes samt Einstreu (5) detektiert wird und in dem Areal, in dem durch den Temperatur- bzw. Geruchs- bzw. Optiksensor Mist (6) detektiert wird, der zumindest obere Bereich der Einstreu samt Mist (5) von der Aufnahmevorrichtung des fahrbaren Reinigungsgerätes (20)aufgenommen und der Trennvorrichtung (40) zugeführt wird.

5. Fahrbares Reinigungsgerät zum Trennen von auf Böden von Pferdeställen, Ausläufen oder Ähnlichem aufgebrachter Einstreu von Mist, insbesondere für ein Verfahren nach einem der Ansprüche 1 bis 4, **gekennzeichnet durch** eine Aufnahmevorrichtung (30) und eine Trennvorrichtung (40), wobei die Aufnahmevorrichtung (30) vorzugsweise gegenläufige Aufnahmeelemente (1) umfasst, die den Mist samt Einstreu (5) vom Boden (12) aufnehmen und der Trennvorrichtung (40) zuführen und wobei die Trennvorrichtung (40) ein Siebelement (4) und ein Fördermittel (3) umfasst, wobei das Fördermittel (3) die Einstreu samt Mist (5) entlang des Siebelements (4) - das eine Vielzahl von Löchern (45) aufweist, deren Durchmesser kleiner ist als die minimale Ausdehnung der Einstreu (8) - bewegt, wobei Rüttel- oder Schleuderbewegungen des Siebelements (4) und/oder des Fördermittels (3) den Mist (6) **durch** die Löcher (45) des Siebelements (4) hindurch in einen Mistsammelbehälter (7) rütteln, drücken bzw. schleudern und das Fördermittel (3) die Einstreu (8) im Endbereich des Siebelements (4) in einen Einstreusammelbehälter (21) oder auf den Auslauf- bzw. Stallboden (12) auswirft.

6. Fahrbares Reinigungsgerät nach Anspruch 5, **dadurch gekennzeichnet, dass** das Fördermittel (3) als Förderschnecke (3a) ausgeführt ist, die den zugeführte Mist samt Einstreu (5) durch das als Lochtrommel (4a) ausgeführte Siebelement (4) fördert, wobei sich die Förderschnecke (3a) um eine Achse (A) dreht, sodass die Zentrifugalkraft den Mist (6) durch die Löcher (45) der Lochtrommel (4a) hindurch in den Mistsammelbehälter (7) hinausschleudert bzw. -drückt.

7. Fahrbares Reinigungsgerät nach Anspruch 6, **dadurch gekennzeichnet, dass** die Förderschnecke (3a) zumindest zwei Drehbereiche aufweist, die sich in unterschiedlicher Geschwindigkeit um die Achse (A) drehen.

8. Fahrbares Reinigungsgerät nach Anspruch 6 oder 7, **dadurch gekennzeichnet, dass** die Drehgeschwindigkeit der zumindest zwei Drehbereiche der Förderschnecke (3a) in Förderrichtung entlang des Siebelements (4) abnimmt.

9. Fahrbares Reinigungsgerät nach einem der Ansprüche 5 bis 8, **dadurch gekennzeichnet, dass** die Aufnahmeelemente (1), die im Frontbereich des Reinigungsgeräts (20) angeordnet sind, in Form von zwei gegenläufigen Schaufeln bzw. Scheiben (1a) gebildet sind, die sich in einem Aufnahmebereich (31) der Aufnahmevorrichtung (30) überlappen, sodass die Aufnahmeelemente (1) die in der im Wesentlichen gesamten Breite des Frontbereichs des Reinigungsgeräts (20) aufgenommenen Mist samt Einstreu (5) durch die gegenläufige Bewegung der Schaufeln bzw. Scheiben (1a) zur Trennvorrichtung (40) befördern.

10. Fahrbares Reinigungsgerät nach einem der Ansprüche 5 bis 9, **dadurch gekennzeichnet, dass** es einen Geräterahmen (22), vorzugsweise vier am Geräterahmen (22) angeordnete Räder (2) und zumindest eine vorzugsweise elektrische Antriebseinheit zum Antreiben der Räder (2), der Aufnahmevorrichtung (30) und der Trennvorrichtung (40) umfasst.

11. Fahrbares Reinigungsgerät nach einem der Ansprüche 5 bis 10, **dadurch gekennzeichnet, dass** das Reinigungsgerät (20) einen Drehmomentsensor umfasst, der das Drehmoment der zumindest einen Antriebseinheit detektiert und einer Steuer- und Regeleinrichtung zuführt.

12. Fahrbares Reinigungsgerät nach einem der Ansprüche 5 bis 11, **dadurch gekennzeichnet, dass** ein Temperatur- und/oder Geruchssensor vorgesehen ist, der die Temperatur und/oder den Geruch in einem Detektierbereich - der im Wesentlichen dem Stallboden (12) samt aufgebrachter Einstreu und Mist (5) entspricht - erfasst und der Steuer- und Regeleinheit zuführt.

13. Fahrbares Reinigungsgerät nach einem der Ansprüche 5 bis 12, **dadurch gekennzeichnet, dass** die Antriebseinheit - vorzugsweise automatisch durch die Steuer- und Regeleinheit - zwischen einem Fahrmodus und einem Arbeitsmodus schaltbar ist.

14. Fahrbares Reinigungsgerät nach einem der Ansprüche 5 bis 13, **gekennzeichnet durch** eine Waschvorrichtung, die die vom Mist (6) getrennte Einstreu (8) vor dem Auswerfen auf den Auslauf- bzw. Stallboden (12) wäscht.

15. Fahrbares Reinigungsgerät nach einem der Ansprüche 5 bis 14, **gekennzeichnet durch** eine Sprühvorrichtung, die die vom Mist (6) getrennte Einstreu (8) mit biologischen Hilfsmitteln besprüht.
